# EUROPÄISCHE PATENTANMELDUNG

(11) **EP 1 977 927 A2**
(43) Veröffentlichungstag der Anmeldung: **08.10.2008**
(21) Anmeldenummer: 08001472.3
(22) Anmeldetag: 26.01.2008
(51) Int. Cl.: B60N 2/22, B60N 2/68

(54) **Fahrzeugsitz**

(30) Priorität: 05.04.2007 DE 202007005182 U
(71) Anmelder: Brose Fahrzeugteile GmbH & Co. Kommanditgesellschaft Coburg, 96450 Coburg (DE)
(72) Erfinder: Dallos, Christian, 96049 Bamberg (DE); Höpfner, Andreas, 98646 Hildburghausen (DE); Klein-Hitpaß, Thorsten, Nagoya, Aichi 464-0064 (JP)
(74) Vertreter: Tergau & Pohl Patentanwälte

(57) **Zusammenfassung**

Der Fahrzeugsitz (2) umfasst eine Lehnengestell (4) und ein Sitzgestell (6), die über einen Beschlag (8) aneinander befestigbar sind. Bei der Montage werden zueinander korrespondierende Löcher (22,23) am Beschlag (8) und am Sitzgestell (6) in Überdeckung gebracht, um die beiden Gestellteile (4,6) mit Hilfe von Befestigungselementen miteinander zu verbinden. Für die Montage sind Montagehilfen (8A,6A; 8B,6B) vorgesehen, die formschlüssig ineinander greifen und derart ausgebildet sind, dass das Lehnengestell (4) und das Sitzgestell (6) in einer Montagehilfsposition gehalten sind, in der die zueinander korrespondierenden Löcher (22,23) zueinander ausgerichtet sind. Durch die Fixierung der beiden Gestellteile (4,6) in einer Montagehilfsposition wird die Montage vereinfacht, da kein händisches Ausrichten mehr erforderlich ist.

## Beschreibung

Die Erfindung betrifft einen Fahrzeugsitz, insbesondere für ein Kraftfahrzeug.

Kraftfahrzeugsitze, insbesondere für Personenkraftwagen, sind üblicherweise mehrteilig ausgebildet und weisen einen Sitz sowie eine am Sitz befestigte Lehne auf, deren Neigung gegenüber dem Sitz verstellbar ist. Ein Gestell übernimmt hierbei insbesondere die mechanische Tragfunktion. Ein Lehnengestell ist üblicherweise über einen Beschlag an einem Sitzgestell befestigt. An den Gestellen sind regelmäßig ein Sitzkissen bzw. ein Rückenlehnenkissen angeordnet. Das Sitzgestell wird im Kraftfahrzeug üblicherweise über Führungsschienen am Fahrzeugboden befestigt, so dass eine Längsverstellung ermöglicht ist. Das Lehengestell ist in seiner Neigung gegenüber dem Sitzgestell verstellbar.

Die Fahrzeugsitze werden üblicherweise bei Zulieferbetrieben montiert und als vorgefertigte Fahrzeugsitze dem Automobilhersteller zugeliefert. Aufgrund des hohen Kostendrucks in der Automobilindustrie wird eine möglichst einfache und schnelle Montage der einzelnen Teile eines Fahrzeugsitzes angestrebt.

Der vorliegenden Erfindung liegt daher die Aufgabe zugrunde, eine schnelle und einfache Montage eines Fahrzeugsitzes zu ermöglichen.

Die Aufgabe wird gemäß der Erfindung gelöst durch einen Fahrzeugsitz mit der Merkmalskombination des Patentanspruchs 1. Der Fahrzeugsitz umfasst danach zwei Gestellteile, nämlich ein Lehnengestell und ein Sitzgestell, die über einen Beschlag aneinander befestigbar sind. Zumindest eines der Gestellteile, üblicherweise das Sitzgestell, und der Beschlag, welcher vorzugsweise am Lehnengestell vormontiert befestigt ist, weisen zueinander korrespondierende Befestigungsstellen auf. Derartige Befestigungsstellen sind insbesondere Löcher oder Bohrungen, durch die bei der Montage beispielsweise Bolzen oder auch Schrauben als Befestigungselemente hindurchgeführt werden, so dass der Beschlag und mit ihm das Lehnengestell am Sitzgestell befestigt wird. In der Montageendposition, bei der die beiden Teile über die Befestigungselemente aneinander befestigt sind, fluchten die Befestigungsstellen, also die Löcher, miteinander. Um eine einfache Montage zu ermöglichen, sind weiterhin Montagehilfen am Gestellteil und am Beschlag vorgesehen, die ein Montagehilfen-Paar bilden. Bei der Montage des Lehnengestells am Sitzgestell greifen diese beiden Montagehilfen nunmehr formschlüssig derart ineinander, dass das Lehnengestell und das Sitzgestell relativ zueinander in einer Montagehilfsposition gehalten sind, in der die zueinander korrespondierenden Befestigungsstellen zur Befestigung über die Befestigungselemente zueinander ausgerichtet sind.

Bei der Montage wird das Lehnengestell in einer Montagerichtung, die im Wesentlichen der Vertikalrichtung oder z-Richtung entspricht, von oben auf das Sitzgestell aufgeschoben, so dass der üblicherweise nach Art einer flachen Platte ausgebildete Beschlag in Überdeckung mit Seitenwangen des Sitzgestells kommt. In den Seitenwangen sind die korrespondierenden Löcher ausgebildet.

Allein durch das Aufsetzen des Lehnengestells auf das Sitzgestell wird zwischen den beiden Montagehilfen ein wirksamer Formschluss ausgebildet, der das Lehnengestell und das Sitzgestell bereits in einer Montagehilfsposition hält. Die Montagehilfen sind hierzu als geeignete konstruktive Elemente ausgebildet, die direkt am Gestellteil und am Beschlag ausgebildet sind. In der Montagehilfsposition sind die Gestellteile bereits derart aneinander fixiert, dass keine weiteren Halterungsmaßnahmen mehr erforderlich sind und die Relativposition zwischen den beiden Gestellteilen allein durch die Montagehilfen fixiert ist. Der besondere Vorteil hierbei ist, dass automatisch durch das Aufsetzen des Lehnengestells die Löcher in Position zueinander gebracht werden, so dass problemlos die Befestigungselemente durch die Löcher hindurchgesteckt werden können.

Gemäß einer bevorzugten Ausgestaltung ist das Montagehilfen-Paar dabei gebildet durch eine Randausnehmung und einen Querstift, die zur Ausbildung eines in X-Richtung wirksamen Formschlusses im Wesentlichen in Z-Richtung ineinander verschiebbar sind. Dies wird durch einfaches Aufsetzen des Lehnengestells auf das Sitzgestell erzielt. Unter X-Richtung wird hierbei die Längsrichtung des Sitzgestells verstanden, unter Z-Richtung die senkrecht hierzu orientierte Richtung, die in etwa in Längsrichtung des Lehnengestells verläuft. Unter Quer- oder Y-Richtung wird eine Richtung verstanden, die quer sowohl zur X- als auch zur Z-Richtung orientiert ist. Der sich in Querrichtung erstreckende Querstift ist vorzugsweise als eine ausgebogene Lasche ausgebildet und die Randausnehmung ist beispielsweise durch Stanzen erzeugt, wobei die Randausnehmung ein Teil der umlaufenden Randkontur ist.

Gemäß einer bevorzugten Weiterbildung ist zumindest ein weiteres Montagehilfen-Paar vorgesehen, wobei die Montagehilfen-Paare Formschlüsse ausbilden, die in unterschiedlichen Richtungen wirksam sind. Durch diese Maßnahme wird das Lehnengestell sicher und zuverlässig am Sitzgestell in der Montagehilfsposition fixiert.

Zweckdienlicherweise wirkt dabei das weitere Montagehilfen-Paar einer Verdrehung des Beschlags gegenüber dem Sitzgestell entgegen. Hierzu bildet das weitere Montagehilfen-Paar insbesondere einen in Z-Richtung wirksamen Formschluss aus. Zweckdienlicherweise wird dies dadurch erreicht, dass das Montagehilfen-Paar gebildet ist durch eine Querlasche und einen Anschlag, die einander in der Montagehilfsstellung hintergreifen. Die Querlasche ist hierbei zweckdienlicherweise durch eine Umkantung einer Seitenwand insbesondere des Gestellteils ausgebildet. Der Anschlag ist beispielsweise eine randseitig angeordnete Nase am Beschlag.

Insgesamt sind daher die Montagehilfen-Paare in kostengünstiger und einfacher Weise durch Umkantungen, Ausbiegungen und/oder Stanzungen aus den Seitenwangen des Gestellteils bzw. aus dem Beschlags gebildet. Es fallen daher für die Montagehilfen nahezu keine zusätzlichen Kosten an. Durch die sichere Fixierung wird gleichzeitig die Montage deutlich vereinfacht und insbesondere sicher. Insbesondere wird durch das weitere Montagehilfen-Paar ein Verdrehen des Lehnengestells gegenüber dem Sitzgestell verhindert. Aufgrund des Gewichts würde nämlich bei einer fehlenden Fixierung in Z-Richtung bzw. in Drehrichtung die Gefahr bestehen, dass das Lehnengestell aufgrund seines Eigengewichts nach vorne oder nach hinten wegkippt, was unter Umständen sogar zu einer Gefährdung von Personen bei der Montage führen kann.

Gemäß einer bevorzugten Weiterbildung sind die Montagehilfen bezüglich der Befestigungsstellen derart angeordnet, dass erst bei einer Befestigung über die Befestigungselemente das Lehnengestell und das Sitzgestell in eine Montageendposition gebracht wird, die gegenüber der Montagehilfsposition zumindest geringfügig verändert ist. Zweckdienlicherweise sind in der Montageendposition hierbei die Montagehilfen des jeweiligen Montagehilfen-Paars voneinander getrennt, d.h. sie haben in der Montageendposition keinen Kontakt mehr zueinander, sind daher voneinander entkoppelt. Dies hat den besonderen Vorteil, dass bei der normalen Benutzung beim Kraftfahrzeugbetrieb die Montagehilfen nicht aneinander stoßen und somit beispielsweise nicht zu unerwünschten Klappergeräuschen etc. führen können. Diese Entkopplung wird hierbei dadurch erreicht, dass sich Montagehilfsposition und Montageendposition voneinander unterscheiden, d.h. beim Befestigen über die Befestigungselemente erfolgt eine Relativbewegung der beiden Gestellteile zueinander. Diese Relatiwerschiebung wird beispielsweise dadurch hervorgerufen, dass in der Montagehilfsstellung die einzelnen Befestigungslöcher nicht exakt miteinander fluchten, dass also ihre zentralen Mittenachsen nicht auf einer gemeinsamen Linie liegen, sondern versetzt und/oder winklig zueinander angeordnet sind. Der Versatz ist dabei jedoch derart bemessen, dass weiterhin ein Einfügen der Befestigungsbolzen, wie beispielsweise Befestigungsschrauben, möglich ist. Beim Anziehen der Befestigungsschrauben wird dann aufgrund des Versatzes der Mittenachsen der Löcher die Relativbewegung hervorgerufen, die zu der Entkopplung der Montagehilfen führt.

Ein Ausführungsbeispiel der Erfindung wird nachfolgend anhand der Zeichnung näher erläutert. Es zeigen jeweils in schematischen perspektivischen Darstellungen:
- Fig. 1: ein Traggestell eines Fahrzeugsitzes nach Art einer Explosionsdarstellung, umfassend ein Lehnengestell und ein Sitzgestell,
- Fig. 2: eine ausschnittsweise Darstellung des Sitzgestells
- Fig. 3: eine ausschnittsweise Darstellung des Sitzgestells mit dem Lehnengestell, die sich zueinander in einer Montagehilfsposition befinden sowie
- Fig. 4: eine ausschnittsweise Darstellung des Lehnengestells mit dem Beschlag mit randseitig an diesem ausgebildeten Einführfasen.

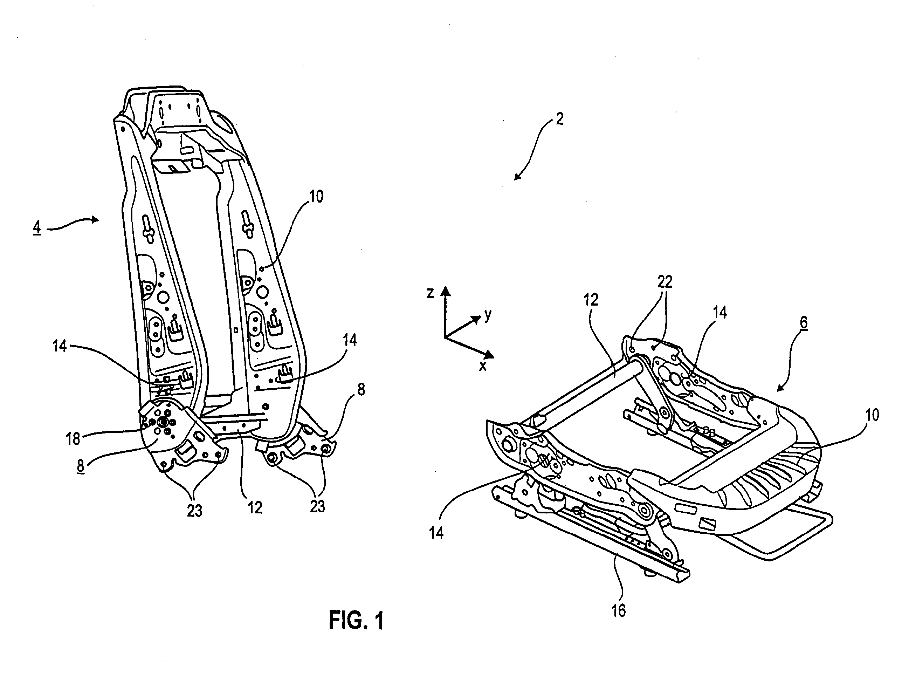

Aus Fig. 1 ist das Traggestell eines Fahrzeugsitzes 2 für einen Personenkraftwagen zu entnehmen. Der Fahrzeugsitz 2 umfasst ein Lehnengestell 4 sowie ein Sitzgestell 6, die bei der Montage mit Hilfe eines Beschlags 8 miteinander verbunden werden. Der Beschlag 8 ist vormontiert am Lehnengestell 4 befestigt. Der Beschlag 8 ist im Ausführungsbeispiel nach Art eines separaten Adapterbleches ausgebildet.

Im Ausführungsbeispiel umfassen beide Gestellteile 4,6 einen umlaufenden Tragrahmen 10, der üblicherweise aus Metall ausgebildet ist und die notwendige Stabilität für den Fahrzeugsitz 2 gewährleistet. Im Verbindungsbereich, also im unteren Bereich des Lehnengestells 4, sowie im hinteren Bereich des Sitzgestells 6, ist am Lehnengestell 4 sowie am Sitzgestell 6 jeweils eine Quertraverse 12 vorgesehen. Diese verbindet jeweils zwei randseitige Seitenwangen 14 miteinander. Die Seitenwangen 14 sind hierbei im Wesentlichen flach und insbesondere aus einem Flachstahl ausgebildet, welcher beispielsweise durch Biege- und Stanzvorgänge in eine gewünschte Kontur gebracht wurde.

Zur Verbindung der beiden Gestellteile 4,6 miteinander ist der Beschlag 8 vorgesehen, welcher im Wesentlichen plattenförmig ausgebildet und üblicherweise ebenfalls aus einem Flachstahl durch Stanz- und Umformvorgänge hergestellt wurde.

Das Sitzgestell 6 umfasst weiterhin eine Schienenführung 16. Diese hat eine Ober- und eine Unterschiene. Die Unterschiene wird fest mit einem Fahrzeugboden verbunden und die Oberschiene kann zur Sitzlängsverstellung in Längsrichtung (X-Richtung) in der Unterschiene verschoben werden. Im montierten Endzustand ist die Neigung des Lehnengestells 4 zudem gegenüber dem Sitzgestell 6 verstellbar.

Zur Montage des Lehnengestells 4 am Sitzgestell 6 wird üblicherweise das Lehnengestell 4 in etwa in Z-Richtung (Vertikalrichtung) von oben auf das Lehnengestell 4 aufgesetzt. Die seitlich angebrachten und mit mehreren Schrauben 18 am Lehnengestell 4 vormontierten Beschläge 8 werden hierbei seitlich an den Seitenwangen 14 des Sitzgestells 6 entlang geschoben. Hierdurch wird das Lehnengestell 4 relativ zum Sitzgestell 6 in Quer- oder Y-Richtung geführt und ausgerichtet. Die Beschläge 8 bieten hierbei also eine gewisse Montagevereinfachung, insbesondere führen sie das Lehnengestell 4 beim Aufsetzen auf das Sitzgestell 6.

Für die Befestigung über hier nicht dargestellte Bolzen oder Schrauben müssen weiterhin einander zugeordnete und im Ausführungsbeispiel als Löcher 22,23 ausgebildete Befestigungsstellen am Beschlag 8 sowie am Sitzgestell 6 in Überdeckung gebracht werden. Bei herkömmlichen Gestellteilen 4,6 muss bisher eine genaue Positionierung mit der Hand vorgenommen werden, damit die Schrauben durch die dann zueinander fluchtend ausgerichteten Löcher 22,23 geführt werden können. Dies erweist sich teilweise nicht zuletzt aufgrund des Eigengewichts des Lehnengestells 4 als schwierig, zumindest jedoch als zeitaufwändig.

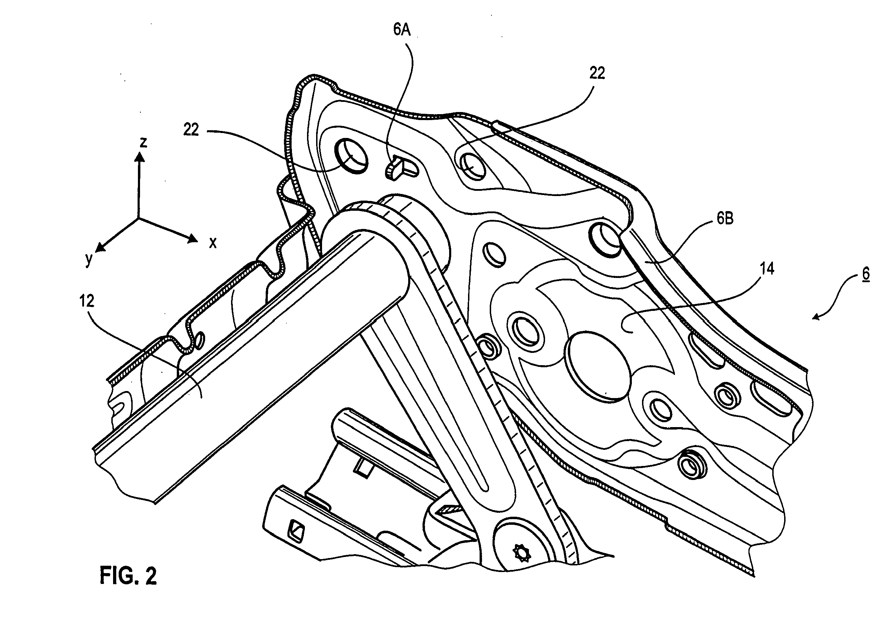

Um die Montage zu vereinfachen, sind am Beschlag 8 sowie am Sitzgestell 6 jeweils Montagehilfen vorgesehen. Die Montagehilfen sind hierbei konstruktive Hilfselemente, die einstückig am Beschlag 8 und am Sitzgestell 6 ausgebildet sind. Die Ausgestaltung und Funktionsweise der Montagehilfen werden nachfolgend anhand der Figuren 2 bis 4 näher erläutert.

Beim Aufstecken des Lehnengestells 4 mit dem daran befestigten Beschlag 8 auf das Sitzgestell 6 werden die beiden Gestellteile 4,6 automatisch in die definierte Montagehilfsposition gebracht. Die Montagehilfsposition ist hierbei derart ausgebildet, dass die Löcher 23 am Beschlag 8 mit den zugeordneten Löchern 22 am Sitzgestell 6 ausgerichtet sind, so dass die Schraube durch die zueinander ausgerichteten Löcher 22,23 hindurchgeführt werden kann.

Als Montagehilfen sind hierbei am Beschlag eine Randausnehmung 8A sowie eine randseitige Nase 8B vorgesehen. Diese Montagehilfen 8A,8B werden bereits beim Herstellprozess des Beschlages 8 ausgebildet, beispielsweise bei einem Stanzvorgang, welcher die Außenkontur des Beschlags 8 festlegt. Es fallen für die Ausbildung dieser Montagehilfen 8A,8B daher bevorzugt keine zusätzlichen Herstellungskosten an.

Am Sitzgestell 6 sind die Montagehilfen gebildet durch einen Querstift 6A sowie eine Querlasche 6B. Der Querstift 6A ist hierbei gebildet durch eine aus der Seitenwange 14 in Quer- oder Y-Richtung ausgebogene Lasche. Die Querlasche 6B wiederum ist gebildet durch eine randseitige Umkantung der Seitenwange 14. Diese Umkantung ist über weite Teile der Seitenwange 14 ausgebildet und lediglich im Bereich des Beschlags 8 unterbrochen. Sie weist daher an dieser Stelle eine Art Einführöffnung für den Beschlag 8 auf. Die Breite der Einführöffnung ist and die Breite des Beschlags 8 angepasst und zwar derart, dass die Nase 8B die Umkantung hintergreift.

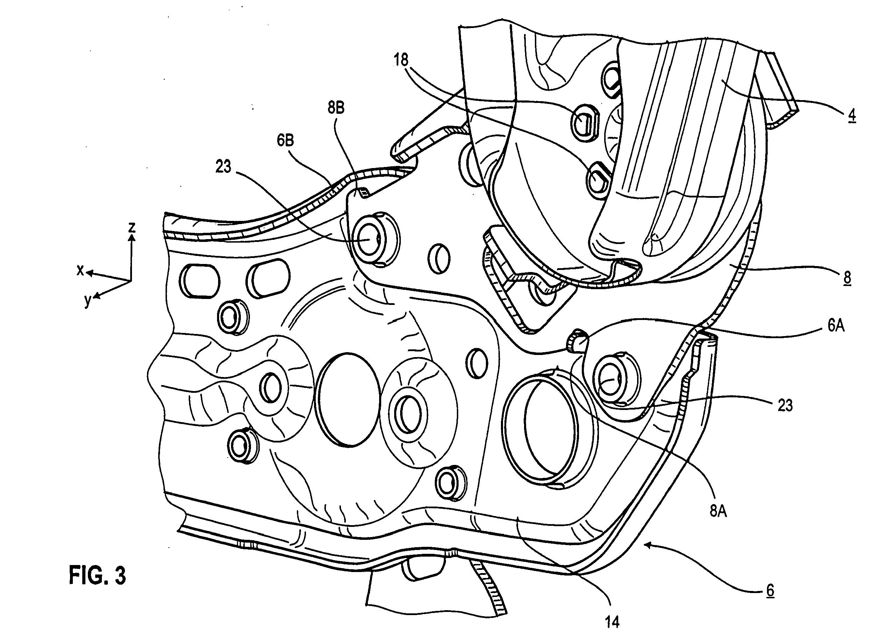

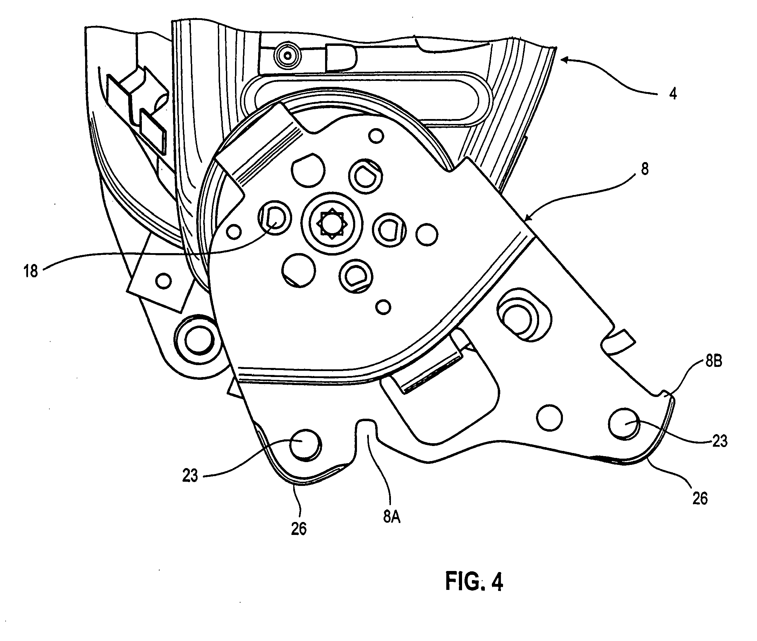

Die Randausnehmung 8A und der Querstift 6A sowie die Nase 8B und die Querlasche 6B bilden jeweils Montagehilfen-Paare 8A,6A bzw. 8B,6B. Diese beiden Paare wirken jeweils zusammen und bilden miteinander einen Formschluss aus. Durch die Randausnehmung 8A und den Querstift 6A wird bereits eine Fixierung des Lehnengestells 4 relativ zum Sitzgestell 6 in Z- sowie in X-Richtung erreicht. Das zusätzliche Montagehilfenpaar, bestehend aus Nase 8B und Querlasche 6B, dient als Verdrehsicherung, so dass das Lehnengestell 4 nicht aufgrund seines Eigengewichts sich um eine dann durch den Querstift 6A definierte Drehachse nach hinten weg dreht. Insgesamt ist daher durch die Montagehilfen 8A,6A; 8B,6B eine sichere, formschlüssige Fixierung in der Montagehilfsposition gewährleistet. Die Fixierung in Y-Richtung wird durch die randseitige Anordnung des Beschlags 8 erreicht. Wie insbesondere aus den Fig. 3 und Fig. 4 zu entnehmen ist, ist der Beschlag 8 am Lehnengestell 4 außenseitig angeordnet und ist zu seinem unteren, zum Sitzgestell 6 orientierten Teilbereich nach innen eingebogen, so dass der Beschlag 8 an der Innenseite der Seitenwange 14 des Sitzgestells 6 anliegt. Um ein einfaches Einführung der beiden gegenüberliegende Beschläge 8 zwischen die gegenüberliegenden Seitenwangen 14 des Sitzgestells 6 zu ermöglichen, sind am Beschlag 8 randseitig Einführfasen 26 ausgebildet. Die Einführfasen 26 sind hierbei an den in etwa in z-Richtung hervorstehenden Teilbereichen ausgebildet, mit denen voraus der Beschlag 8 eingeführt wird. Zur Ausbildung der Einführfasen 26 ist eine umlaufende Außenkante des Beschlags 8 zumindest bereichsweise abgeschrägt.

Bei der Montage wird nunmehr derart vorgegangen, dass das Lehnengestell 4 von oben zunächst in etwa entgegen der Z-Richtung auf das Sitzgestell 6 aufgesetzt wird. Hierbei ist eine Schub-Drehbewebung, also eine mit einer kleinen Drehbewegung überlagerte Einschubbewegung vorgesehen. Dadurch wird zunächst der Anschlag 8 mit seiner Nase 8B voraus unter die die Querlasche 6 bildende Umkantung des Sitzgestells 8 geführt, um hier einen formschlüssigen Hintergriff auszubilden. Anschließend wird die Randausnehmung 8A über den Querstift 6A geschoben bzw. geschwenkt. Der Querstift 6A liegt in der Randausnehmung 8A an und die Nase 8B stützt sich an der Unterseite der Querlasche 6B ab. Durch einfaches Aufsetzen des Lehnengestells 4 wird daher eine Montagehilfsposition eingenommen, in der die beiden Gestellteile 4,6 in ihrer Position zueinander fixiert sind. Durch das Eigengewicht des Lehnengestells 4 wird diese Montagehilfsposition beibehalten.

Im nächsten Schritt werden durch die zueinander ausgerichteten Löcher 22,23, die einerseits im vorderen Bereich nahe der Querlasche 6B bzw. der Nase 8B und andererseits im hinteren Bereich nahe des Querstifts 6A bzw. der Randausnehmung 8A ausgebildet sind, jeweils eine Schraube (in Fig. 3 nicht dargestellt) durchgeführt und angezogen.

Die Lage und Orientierung der Montagehilfen 8A,8B; 6A,6B sind hierbei derart gewählt, dass beim Anziehen der Schrauben eine automatische Selbstausrichtung des Lehnengestells 4 relativ zum Sitzgestell 6 erfolgt und zwar derart, dass eine Montageendposition eingenommen wird (nicht dargestellt). In dieser Montageendposition sind die einzelnen Montagehilfen-Paare 8A,6A; 8B,6B voneinander entkoppelt, d.h. sie berühren sich nicht mehr. Hierdurch werden im normalen Fahrbetrieb störende Geräusche vermieden.

Um diese Selbstausrichtung beim Anziehen der Schrauben zu erreichen, fluchten in der Montagehilfsstellung die zueinander korrespondierenden Löcher 22,23 beispielsweise nicht exakt zueinander. Die Mittenachsen der einzelnen Löcher 22,23 weisen daher einen gewissen Versatz zueinander auf, so dass beim Festziehen die beiden Mittenachsen in fluchtende Ausrichtung gebracht werden und somit automatisch die Montageendstellung eingenommen wird.

Vorzugsweise sind hierbei die Toleranzen und die Anordnung sowie Ausgestaltung der Montagehilfen-Paare 8A,6A; 8B,6B derart gewählt, dass bei einem Anziehen der vorderen im Bereich der Nase 8B durchgeführten Schraube automatisch die hinteren Löcher 22,23 zueinander ausgerichtet werden. D.h. durch einen ersten Schraubvorgang wird eine Dreh- oder auch Verschiebebewegung des Lehnengestells 4 erzwungen, was zur genauen Ausrichtung der zweiten, insbesondere hinteren, Löcher 22,23 führt. Anschließend wird dann durch die zweiten Schraublöcher 22,23 eine weitere Schraube geführt und angezogen.

Durch die zusätzlichen Montagehilfen 8A,6A; 8B,6B ist bei der Montage insgesamt der Positionieraufwand reduziert. Es ist keine händische Ausrichtung mehr erforderlich, um die Löcher 22,23 in Überdeckung zu bringen. Auch ist durch die Verdrehsicherung, die im Ausführungsbeispiel durch das Zusammenwirken der Nase 8B mit der Querlasche 6B erzielt ist, ein verbesserter Arbeitsschutz erreicht, da das Lehnengestell 4 nicht nach hinten umkippen kann. Von besonderem Vorteil ist hierbei, dass diese Montagehilfen durch einfache Stanz- und Umformvorgänge an bereits bestehenden Bauteilen erzielt werden, so dass die Bereitstellung dieser Montagehilfen kostenneutral erfolgt und kein weiteres zusätzliches Bauteil erforderlich ist. Schließlich ist noch von besonderer Bedeutung, dass in der Montageendstellung die Montagehilfen voneinander entkoppelt sind, so dass im normalen Fahrbetrieb keine störenden Geräusche auftreten.

### Bezugszeichenliste

- 2: Fahrzeugsitz
- 4: Lehnengestell
- 6: Sitzgestell
- 6A: Querstift
- 6B: Querlasche
- 8: Beschlag
- 8A: Randausnehmung
- 8B: Nase
- 10: Tragarm
- 12: Quertraverse
- 14: Seitenwange
- 16: Schienenführung
- 18: Schraube
- 22,23: Löcher
- 26: Einführfase

## Patentansprüche

1. Fahrzeugsitz (2) umfassend zwei Gestellteile, nämlich ein Lehnengestell (4) und ein Sitzgestell (6), die über einen Beschlag (8) aneinander mit Hilfe von Befestigungselementen befestigbar sind, wobei zumindest eines der Gestellteile (6) und der Beschlag (8) zueinander korrespondierende Befestigungsstellen (22,23) aufweisen, die in einer Montageendposition miteinander fluchten, wobei zusätzlich zu den Befestigungsstellen (22,23) an dem Gestellteil (6) und dem Beschlag (8) Montagehilfen (6A,8A; 6B,8B) vorgesehen sind, die ein Montagehilfen-Paar bilden und formschlüssig ineinander greifen und derart ausgebildet sind, dass das Gestellteil (6) und der Beschlag (8) in einer Montagehilfsposition gehalten sind, in der die zueinander korrespondierenden Befestigungsstellen (22,23) zur Befestigung über die Befestigungselemente zueinander ausgerichtet sind.

2. Fahrzeugsitz (2) nach Anspruch 1,
bei dem das Montagehilfen-Paar gebildet ist durch eine Randausnehmung (8A) und einen Querstift (6A), die zur Ausbildung eines in x-Richtung wirksamen Formschlusses im Wesentlichen in z-Richtung ineinander verschiebbar sind.

3. Fahrzeugsitz (2) nach Anspruch 1 oder 2,
bei dem ein weiteres Montagehilfen-Paar (6B,8B) vorgesehen ist, wobei die Montagehilfen-Paare Formschlüsse ausbilden, die in unterschiedlichen Richtungen wirksam sind.

4. Fahrzeugsitz (2) nach Anspruch 3,
wobei das weitere Montagehilfen-Paar (6B,8B) einer Verdrehung des Beschlags (8) gegenüber dem Gestellteil entgegenwirkt.

5. Fahrzeugsitz (2) nach Anspruch 3 oder 4,
bei dem das weitere Montagehilfen-Paar (6B,8B) einen in z-Richtung wirksamen Formschluss ausbildet.

6. Fahrzeugsitz (2) nach einem der Ansprüche 3 bis 5,
bei dem das weitere Montagehilfen-Paar (6B,8B) gebildet ist durch eine Querlasche (6B) und einen Anschlag (8B), die einander in der Montagehilfsstellung hintergreifen.

7. Fahrzeugsitz (2) nach Anspruch 6,
bei dem die Querlasche (6B) gebildet ist durch eine Umkantung einer Seitenwange (14) des Gestellteils (6).

8. Fahrzeugsitz (2) nach einem der vorhergehenden Ansprüche,
bei dem die Montagehilfen (6A,8; 6B,8B) bezüglich der Befestigungsstellen (22) derart angeordnet sind, dass bei einer Befestigung über die Befestigungselemente (18) das Gestell (6) und der Beschlag (8) die Montageendposition einnehmen, die gegenüber der Motagehilfsposition verändert ist.

9. Fahrzeugsitz (2) nach Anspruch 8,
bei dem in der Montageendposition die Montagehilfen (6A,8A; 6B,8B) des jeweiligen Montagehilfen-Paars voneinander getrennt sind.

10. Fahrzeugsitz (2) nach einem der vorhergehenden Ansprüche,
bei dem der Beschlag (8) und / oder das Gestellteil (6) an seinem dem anderen Teil zuorientierten Rand eine Einführfase (26) aufweist.

11. Fahrzeugsitz (2) nach einem der vorhergehenden Ansprüche,
bei dem das Gestellteil das Sitzgestell (6) ist und der Beschlag (8) vormontiert am Lehnengestell (4) befestigt ist.
